# FASCICULE DE BREVET EUROPEEN

(11) **EP 0 830 955 B1**
(45) Date de publication et mention de la délivrance du brevet: **03.07.2002**
(21) Numéro de dépôt: 97402027.3
(22) Date de dépôt: 29.08.1997
(51) Int. Cl.: B60G 3/20, B60G 15/06

(54) **Dispositif de suspension notamment pour véhicule automobile**
Aufhängungsvorrichtung, insbesondere für Kraftfahrzeuge
Suspension device particularly for motor vehicle

(30) Priorité: 20.09.1996 FR 9611509
(43) Date de publication de la demande: 25.03.1998
(73) Titulaire: AUTOMOBILES PEUGEOT, 75116 Paris (FR); AUTOMOBILES CITROEN, 92200 Neuilly-sur-Seine (FR)
(72) Inventeur: Nicolas, Daniel, 78360 Montesson (FR)
(74) Mandataire: Bentz, Jean-Paul

(56) Documents cités:
- EP-A- 0 279 135
- EP-A- 0 312 997
- EP-A- 0 489 638
- DE-A- 4 010 323
- DE-A- 19 509 470
- FR-A- 2 707 926
- US-A- 2 290 923
- US-A- 3 195 918
- US-A- 3 573 880
- US-A- 4 065 152

## Description

On connaît déjà un tel dispositif de suspension pour relier une roue du véhicule à la caisse de celui-ci, du type dans lequel un support de la roue s'articule sur deux bras inférieur et supérieur sensiblement horizontaux et pivotant sur la caisse, et comportant un organe de suspension constitué d'un ressort hélicoïdal traversé par un amortisseur télescopique, le ressort de suspension prenant appui à son extrémité supérieure sur la caisse du véhicule et à son extrémité inférieure sur une coupelle rigidement solidaire du corps tubulaire de l'amortisseur télescopique. Ce type de dispositif de suspension, tel que défini dans le préambule de la revendication 1, est connu par exemple de EP-A-0 312 997.

Toutefois, dans ce type de dispositif, la suspension verticale est parfois perturbée par des frottements parasites survenant lors du coulissement du piston de l'amortisseur dans son corps tubulaire. Ceci est dû notamment au décalage existant généralement entre la direction de coulissement de l'amortisseur et celle des efforts exercés par le sol sur la roue, ce qui engendre un couple parasite venant perturber le coulissement normal du piston dans le corps tubulaire.

On connaît déjà dans l'état de la technique, notamment de DE-A-195 09 470, un dispositif de suspension réliant une roue du véhicule à la caisse de celui-ci, du type Mac Pherson dans lequel un support de la roue s'articule sur un seul bras inférieur sensiblement horizontal et pivotant sur la caisse, et comportant un organe de suspension constitué d'un ressort hélicoïdal traversé par un amortisseur télescopique, ledit organe étant relié à son extrémité supérieure à la caisse du véhicule et à son extrémité inférieure au support de la roue, le ressort étant dissocié de l'amortisseur et l'extrémité inférieure du ressort reposant sur une assiette qui est montée articulée, par l'intermédiaire d'un élément d'articulation à sphère.

On connaît aussi dans l'état de la technique, notamment de EP-A-0 489 638, un dispositif de suspension reliant une roue du véhicule à la caisse de celui-ci, du type dans lequel un support de la roue s'articule sur deux bras inférieur et supérieur sensiblement horizontaux et pivotant sur la caisse, et comportant un amortisseur télescopique et un ressort hélicoïdal dissocié de l'amortisseur, l'amortisseur et le ressort étant reliés à leurs extrémités supérieures à la caisse du véhicule, l'extrémité inférieure de l'amortisseur étant reliée au bras inférieur autour d'un axe sensiblement horizontal et l'extrémité inférieure du ressort prenant appui directement sur le support de la roue.

La présente invention a donc pour but d'éliminer les inconvénients précités et de proposer un dispositif de suspension dans lequel le confort vertical du véhicule est amélioré.

A cet effet, la présente invention a pour objet un dispositif de suspension notamment pour véhicule automobile, pour relier une roue du véhicule à la caisse de celui-ci, du type dans lequel un support de la roue s'articule sur deux bras inférieur et supérieur sensiblement horizontaux et pivotant sur la caisse, et comportant un organe de suspension constitué d'un ressort hélicoïdal traversé par un amortisseur télescopique, ledit organe étant relié à son extrémité supérieure à la caisse du véhicule et à son extrémité inférieure au support de la roue, le ressort étant dissocié de l'amortisseur, l'extrémité inférieure du ressort prenant appui directement sur le support de la roue et l'extrémité inférieure de l'amortisseur s'articulant sur ce support autour d'un axe sensiblement horizontal.

Selon une autre caractéristique, le support de la roue est constitué du pivot de roue proprement dit et d'une jambe sensiblement verticale reliant une portion supérieure du pivot de roue au bras supérieur. Dans ce cas, l'extrémité inférieure du ressort appuie directement sur la jambe précitée.

Selon encore une autre caractéristique de l'invention, le bras supérieur a une forme en U entourant l'organe de suspension et dont les deux branches sont articulées sur la caisse pour immobiliser la jambe précitée en rotation autour d'un axe sensiblement vertical et encaisser ainsi directement le couple parasite précité. Ainsi, la suspension verticale n'est plus directement perturbée par ces couples parasites.

On peut également prévoir que la jambe précitée s'articule sur le pivot de roue autour d'un axe sensiblement vertical de pivotement de la roue. Dans ce cas, l'amortissement vertical du véhicule est également dissocié du guidage de la roue.

L'invention sera mieux comprise, et d'autres buts, détails, avantages et caractéristiques de celle-ci apparaîtront plus clairement au cours de la description explicative qui va suivre d'un mode de réalisation particulier actuellement préféré de l'invention, donné uniquement à titre illustratif et non limitatif, en référence aux dessins schématiques annexés et dans lesquels :

La figure 1 est une vue partielle et en coupe verticale transversale du dispositif de suspension de l'invention.

La figure 2 est une vue partielle et en coupe de la figure 1, suivant la ligne II-II.

La figure 3 est une vue partielle et en coupe de la figure 1, suivant la ligne III-III.

La figure 4 est une vue éclatée et en perspective du dispositif de l'invention.

Suivant l'exemple de réalisation représenté sur les dessins, le dispositif de suspension de l'invention relie une roue R reposant sur le sol S à la caisse C du véhicule. Ce dispositif comporte un pivot de roue 1 qui s'articule à sa portion inférieure par une rotule sur un bras inférieur sensiblement horizontal 2 lui-même articulé sur la caisse autour d'un axe sensiblement longitudinal 2a. Le pivot de roue 1 s'articule également à sa portion supérieure sur une jambe sensiblement verticale 3 par l'intermédiaire d'une fusée 4 dont l'axe A est sensiblement espacé de la verticale V d'un angle θ.

La jambe 3 dite jambe de force avec le pivot de roue 1 font partie, au sens de l'invention, d'un ensemble dit support de la roue. La jambe 3 s'étend sensiblement parallèlement à l'axe A précité.

La jambe 3 est articulée à son extrémité supérieure autour d'un axe sensiblement longitudinal 5 sur un bras supérieur 6 en forme de fourche ou de U. Le bras supérieur 6 est articulé aux extrémités libres opposées 6a des deux branches de la fourche sur une pièce 7 qui est fixée à la caisse C par quatre vis (non représentées). Le bras supérieur 6 s'étend également sensiblement horizontalement comme le bras inférieur 2.

Un amortisseur télescopique 8 est relié à son extrémité supérieure 8a à la pièce 7 précitée et s'articule à son extrémité inférieure autour d'un axe sensiblement horizontal 9 sur la portion inférieure de la jambe 3. La portion supérieure de l'amortisseur 8 traverse sensiblement axialement un ressort de suspension 10 dont la spire supérieure appuie sur une coupelle fixée à la pièce 7 et dont la spire inférieure 10a appuie sur une coupelle 3a solidaire d'une portion supérieure de la jambe 3 précitée.

Comme le ressort 10 appuie directement sur la jambe 3 et non sur l'amortisseur 8, ce dernier ne subit donc aucun effort dû au ressort et travaille uniquement en pompage.

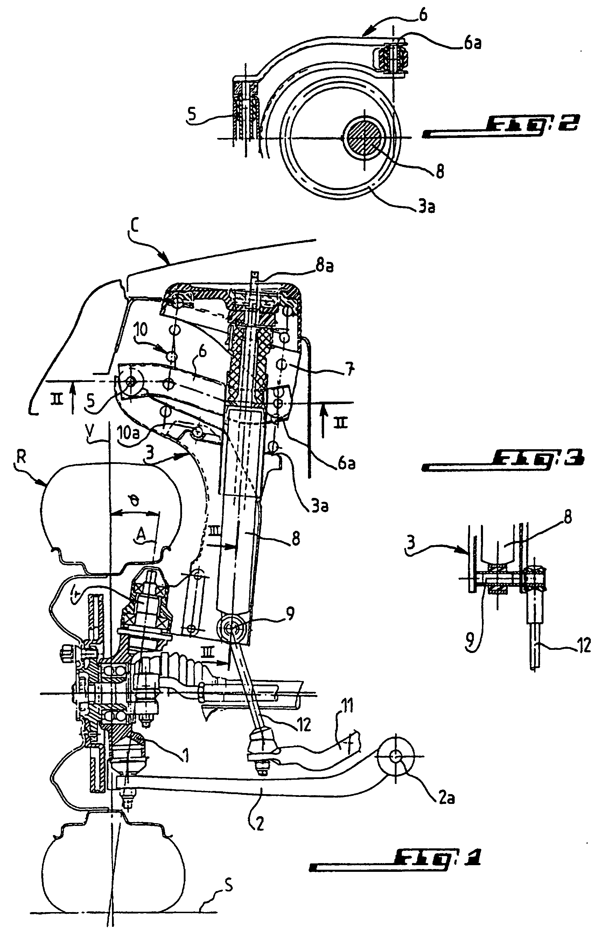

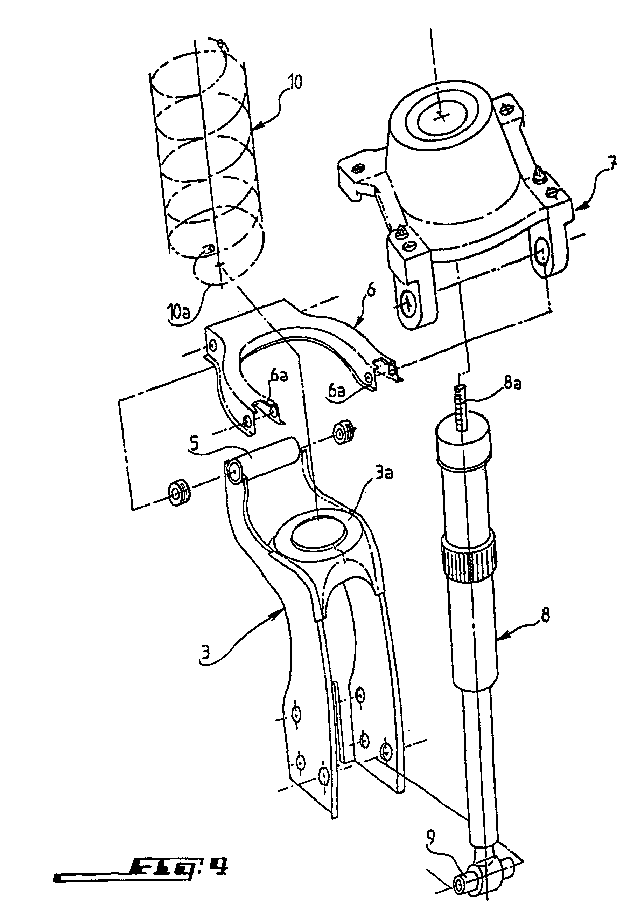

Le bras supérieur 6 en forme de U entoure le ressort 10 et l'amortisseur 8, comme mieux représenté sur la figure 2. Les extrémités libres 6a des branches du bras supérieur 6 sont reliées à la pièce 7 par des articulations élastiques. Les autres articulations peuvent aussi comporter des manchons élastiques.

Cet agencement particulier de la suspension est avantageux car l'amortisseur 8 peut être démonté facilement sans avoir à intervenir sur le ressort et sans avoir à soulever le véhicule. D'autre part, au moins la fusée 4, la jambe 3, le bras supérieur 6 et la pièce 7 peuvent être identiques pour les roues gauche et droite.

On voit également sur les figures 1 et 3 une barre anti-dévers 11 reliée de manière articulée par un levier 12 à l'articulation 9 précitée.

Les autres détails de la suspension illustrée sur la figure 1 ne seront pas décrits dans la présente demande car ils sont bien connus en tant que tels dans l'état de la technique.

Bien entendu, la fusée de pivotement 4 peut être supprimée lorsque le dispositif de suspension de l'invention est appliqué à des roues non directrices.

Toutes les contraintes engendrées par les couples parasites résultant du roulage, sont principalement encaissées par les bras inférieur et supérieur, de façon telle que le coulissement de l'amortisseur 8 s'effectue sans frottement parasite.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention tel que défini dans la revendication 1.

## Revendications

1. Dispositif de suspension notamment pour véhicule automobile, pour relier une roue (R) du véhicule à la caisse (C) de celui-ci, du type dans lequel un support de la roue (1, 3) s'articule sur deux bras inférieur (2) et supérieur (6) sensiblement horizontaux et pivotant sur la caisse, et comportant un organe de suspension (8, 10) constitué d'un ressort hélicoïdal (10) traversé par un amortisseur télescopique (8), ledit organe étant relié à son extrémité supérieure (8a) à la caisse du véhicule et à son extrémité inférieure (9, 10a) au support de la roue,l'extrémité inférieure de l'amortisseur (8) s'articulant sur ce support (3a) autour d'un axe sensiblement horizontal (9), **caractérisé en ce que** le ressort (10) est dissocié de l'amortisseur (8) et a son extrémité inférieure (10a) prenant appui directement sur le support de la roue (3a).

2. Dispositif de suspension selon la revendication 1, **caractérisé en ce que** la portion supérieure de l'amortisseur (8) traverse sensiblement axialement le ressort (10).

3. Dispositif de suspension selon la revendication 1 ou 2, **caractérisé en ce que** le support de la roue est constitué du pivot de roue proprement dit (1) et d'une jambe sensiblement verticale (3) reliant une portion supérieure du pivot de roue au bras supérieur (6), l'extrémité inférieure (10a) du ressort (10) appuyant directement sur cette jambe (3).

4. Dispositif de suspension selon la revendication 3, **caractérisé en ce que** le bras supérieur (6) a une forme en U entourant l'organe de suspension (8, 10) pour immobiliser la jambe précitée (3) autour d'un axe sensiblement vertical (A).

5. Dispositif de suspension selon l'une des revendications 3 et 4, **caractérisé en ce que** la jambe précitée (3) s'articule sur le pivot de roue (1) autour d'un axe sensiblement vertical (A) de pivotement de la roue (R).

## Patentansprüche

1. Aufhängungsvorrichtung, insbesondere für Kraftfahrzeuge, zum Verbinden eines Rades (R) des Fahrzeugs mit dem Kasten (C) desselben, von der Art, in der eine Halterung des Rades (1, 3) um zwei untere (2) und obere (6) Arme deutlich horizontal und schwenkend um den Kasten artikuliert sind und mit einem Aufhängungsorgan (8, 10), das aus einer Zylinderschraubenfeder (10) gebildet wird, die durch einen teleskopischen Stoßdämpfer (9) durchquert wird, wobei besagtes Organ an seinem oberen Ende (8a) mit dem Kasten des Fahrzeugs verbunden ist und an seinem unteren Ende (9, 10a) mit der Halterung des Rades, wobei das untere Ende des Stoßdämpfer (8) auf dieser Halterung (3a) um eine deutlich horizontale Achse (9) artikuliert ist, **dadurch gekennzeichnet, dass** die Feder (10) vom Stoßdämpfer (8) getrennt ist und an ihrem unteren Ende (10a) sich direkt auf der Halterung des Rades (3a) aufstützt.

2. Aufhängungsvorrichtung gemäß Anspruch 1, **dadurch gekennzeichnet, dass** der obere Abschnitt des Stoßdämpfers (9) die Feder (10) deutlich axial durchquert.

3. Aufhängungsvorrichtung gemäß Anspruch 1 oder 2, **dadurch gekennzeichnet**, das die Aufhängung des Rades aus dem Drehpunkt des Rades (1) im eigentlichen Sinne und aus einem einen oberen Abschnitt des Drehpunktes des Rades am oberen Arm (6) verbindenden deutlich vertikalen Bein (3) gebildet wird, wobei das untere Ende (10a) der Feder (10) sich direkt auf diesem Bein (3) aufstützt.

4. Aufhängungsvorrichtung gemäß Anspruch 3, **dadurch gekennzeichnet, dass** der obere Arm (6) eine das Aufhängungsorgan (8, 10) umschließende U-Form hat, um das vorgenannte Bein (3) um eine deutlich vertikale Achse (A) festzustellen.

5. Aufhängungsvorrichtung gemäß Anspruch 3 und 4, **dadurch gekennzeichnet, dass** das vorgenannte Bein (3) auf dem Drehpunkt des Rades (1) um eine deutlich vertikale (A) Schwenkachse des Rades (R) artikuliert ist.

## Claims

1. Suspension device, especially for a motor vehicle, for connecting one wheel ( R ) of the vehicle to the body of the latter, said device being of the type in which a wheel support (1, 3) is joined onto two arms, one lower (2) and one upper (6), both approximately horizontal and pivoting on the body and comprising a suspension member (8, 10) constituted by a helical spring (10) traversed by a telescopic shock absorber (8), said member being connected at its upper extremity (8a) to the body of the vehicle and, at its lower extremity (9, 10a) to the support of the wheel, the lower extremity of the shock absorber (8) being joined onto this support (3a) around an approximately horizontal spindle (9), **characterised in that** the spring (10) is separated from the shock absorber (8) and at its lower extremity (10a) directly taking support on the support of the wheel (3a).

2. Suspension device according to claim 1, **characterised in that** the upper portion of the shock absorber (8) approximately axially traverses the spring (10).

3. Suspension device according to claim 1 or 2, **characterised in that** the support of the wheel is constituted by the actual wheel pivot (1) and an approximately vertical leg (3) connecting an upper portion of the wheel pivot to the upper arm (6), the lower extremity (10a) of the spring (10) resting directly on this leg (3).

4. Suspension device according to claim 3, **characterised in that** the shape of the upper arm (6) is that of a U surrounding the suspension member (8, 10) so as to immobilise said leg (3) around an approximately vertical axis (A).

5. Suspension device according to claim 3 or 4, **characterised in that** said leg (3) is joined onto the wheel pivot (1) around an approximately pivoting axis (A) of the wheel ( R ).
